(19) 

**Europäisches Patentamt**
**European Patent Office**
**Office européen des brevets**

(11) **EP 4 549 777 A1**

(12) **EUROPÄISCHE PATENTANMELDUNG**

(43) Veröffentlichungstag:
**07.05.2025 Patentblatt 2025/19**

(21) Anmeldenummer: **24208258.4**

(22) Anmeldetag: **23.10.2024**

(51) Internationale Patentklassifikation (IPC):
*F16F 9/32* (2006.01)    *F16F 9/54* (2006.01)
*B62K 25/28* (2006.01)    *B62J 45/41* (2020.01)
*B62J 45/414* (2020.01)    *B62J 45/42* (2020.01)
*B60G 17/019* (2006.01)    *B60G 17/06* (2006.01)
*F16F 9/46* (2006.01)

(52) Gemeinsame Patentklassifikation (CPC):
**B60G 17/019; B60G 17/06; B62J 45/41;**
**B62J 45/414; B62J 45/42; B62K 25/283;**
**B62K 25/286; F16F 9/3292; F16F 9/54;**
B60G 2202/312; B60G 2204/112; B60G 2206/41;
B60G 2300/12; B60G 2400/102; B60G 2400/202;
(Forts.)

(84) Benannte Vertragsstaaten:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Benannte Erstreckungsstaaten:
**BA**
Benannte Validierungsstaaten:
**GE KH MA MD TN**

(30) Priorität: **03.11.2023 DE 102023130445**

(71) Anmelder: **KTM AG**
**5230 Mattighofen (AT)**

(72) Erfinder: **WIMMER, Johannes**
**84556 Kastl (DE)**

(74) Vertreter: **Söllner, Udo**
**PATLECTOR Patentanwaltskanzlei**
**Freundorferstr. 34c**
**85598 Baldham (DE)**

(54) **FEDERBEIN MIT EINER FEDEREINRICHTUNG UND EINEM SCHWINGUNGSDÄMPFER**

(57)    Es ist ein Federbein (1) mit einer Federeinrichtung (3) und einem Schwingungsdämpfer (4) vorgesehen, mit einem zur Aufnahme von Dämpfungsfluid ausgebildeten Zylinder (5) und einem darin axial beweglichen Arbeitskolben (6), der mit einer eine Längsachse (8) aufweisenden Kolbenstange (7) gekoppelt ist, wobei der Arbeitskolben (6) einen Innenraum (9) des Zylinders (5) in einen ersten (10) und einen zweiten (11) Arbeitsraum unterteilt, und mit einer Ventileinrichtung (12), die zur Steuerung der Strömung von Dämpfungsfluid zwischen dem ersten (10) und zweiten (11) Arbeitsraum eingerichtet ist sowie einem elektrisch betätigten Solenoid (14), welches Ventilmittel (15) der Ventileinrichtung (12) zur Veränderung eines Durchströmungsdurchlasses (18) der Ventileinrichtung (12) zwischen dem ersten (11) und zweiten (11) Arbeitsraum betätigt, wobei das Federbein (1) eine ein Gehäuse (20) aufweisende erste Aufnahme (19) besitzt, an der sich die Kolbenstange (7) abstützt und die erste Aufnahme (19) zur Anordnung des Federbeins (1) an einem ersten Aufbauelement (23) eines Fahrzeugs (28) eingerichtet ist und das Federbein (1) eine zweite Aufnahme (25) aufweist, welche zur Anordnung des Federbeins (1) an einem zweiten Aufbauelement (27) des Fahrzeugs (28) eingerichtet ist und das Federbein (1) eine Wegmesseinrichtung (31) zur Erfassung des aktuellen Federwegs des Federbeins (1) aufweist, wobei das Gehäuse (20) eine Innenausnehmung (30) aufweist und die Wegmesseinrichtung (31) eine in der Innenausnehmung (30) angeordnete magnetooperative Sensoreinrichtung (31) aufweist, welche zur Erfassung eines Magnetfelds einer zur Sensoreinrichtung (31) beabstandeten Magneteinrichtung (33) eingerichtet ist.

FIG. 2

**(Forts. nächste Seite)**

(52) Gemeinsame Patentklassifikation (CPC): (Forts.)
B60G 2400/252; B60G 2401/172; B60G 2500/10;
F16F 9/469

**Beschreibung**

Die vorliegende Erfindung betrifft ein Federbein mit einer Federeinrichtung und einem Schwingungsdämpfer mit einem zur Aufnahme von Dämpfungsfluid ausgebildeten Zylinder und einem darin axial beweglichen Arbeitskolben nach dem Oberbegriff des Anspruchs 1. Die Erfindung betrifft darüber hinaus ein System mit einem Federbein und einer Magneteinrichtung nach dem Anspruch 6 und auch ein Motorrad mit einem Vorderrad und einem Hinterrad sowie einem Fahrersattel und einer Antriebseinheit und einer das Hinterrad führenden Hinterradschwinge und einem System nach Anspruch 6.

Ein Federbein, wie es vorstehend erwähnt wurde, kann beispielsweise an einem Motorrad oder einem anderen Fahrzeug mit einem Fahrersattel angeordnet werden, wie beispielsweise einem Scooter.

Anhand der EP 2 036 746 B1 ist ein Sensormodul mit Beschleunigungssensor für einen Stoßdämpfer eines Personenkraftwagens bekannt geworden. Das Sensormodul ist dabei an einer Ausnehmung einer Führungsbuchse für die Kolbenstange vorgesehen und befindet sich am Stoßdämpfer außen angeordnet.

Anhand der EP 1 964 696 B1 ist ein Stoßdämpfer mit Lagesensor bekannt geworden, bei dem ein Auswertungsmodul ebenfalls an der Außenseite des Stoßdämpfers angeordnet ist und an einer Innenseite des Innenrohrs des Stoßdämpfers entlang der Längsrichtung des Stoßdämpfers Magnete angeordnet sind.

Beide Anordnungen zeichnen sich also dadurch aus, dass das jeweilige Sensormodul am Außenrohr des jeweiligen Stoßdämpfers außen angeordnet ist.

Eine solche Konfiguration ist bei einem Motorrad nachteilig, insbesondere dann, wenn es sich um ein Geländesportmotorrad handelt, welches erheblichen externen Einflüssen, wie beispielsweise Regen und auch Verschmutzungen und möglichen Beschädigungen durch Steine und Staub oder dergleichen ausgesetzt ist. Auch bei einem Straßenmotorrad ist eine exponierte Lage des Sensormoduls an der Außensilhouette des Motorrads von Nachteil aufgrund der Beaufschlagung mit Regen und auch der Gefahr einer Beschädigung des Sensormoduls. Darüber hinaus besteht bei beiden Motorradgattungen die Gefahr einer Beeinflussung der Signalqualität durch die Übertragung von Motorschwingungen auf das extern angeordnete Sensormodul.

Zur Beeinflussung des Dämpfungsverhaltens eines solchen Federbeins mit dem Ziel einer Isolation der Bewegung des Motorrads und hier insbesondere der sogenannten Hinterhand oder des in Fahrtrichtung des Motorrads hinteren Aufbaus des Motorrads von störenden Anregungen, wie beispielsweise Fahrbahnunebenheiten und dergleichen, ist die Kenntnis des Federwegs und der Beschleunigung des Aufbaus des Motorrads in Hochachsrichtung des Motorrads als Folge der Anregung von Bedeutung zur Ermittlung der Relativgeschwindigkeit und der Aufbaugeschwindigkeit, da diese Werte Eingangsparameter für die Regelung nach dem Prinzip des sogenannten Skyhook Reglers sind.

Der Federweg wird dabei ermittelt als der Weg, den der Arbeitskolben oder ein anderer Bezugspunkt des Motorrads infolge einer Anregung bei der Fahrt des Motorrads über eine Fahrbahnunebenheiten innerhalb des Zylinders oder Arbeitszylinders zurücklegt. Mittels einer numerischen Ableitung des Federwegs nach der Zeit kann dann die Relativgeschwindigkeit ermittelt werden, es ist daher notwendig, den Federweg zu bestimmen.

Nach einer auf die Anmelderin zurückgehenden bekannten Vorgehensweise wird zur Ermittlung des Federwegs der Drehwinkel der Hinterradschwinge, an der sich ein bekanntes Federbein abstützt, herangezogen. Hierbei befindet sich ein Permanentmagnet im Bereich des Schwingendrehpunkts angeordnet und das vom Permanentmagnet erzeugte Magnetfeld wird mittels einer Sensoreinrichtung zur Bestimmung des Drehwinkels ausgewertet.

Es hat sich gezeigt, dass sich diese Vorgehensweise zur Bestimmung des Federwegs und der Relativgeschwindigkeit in der Praxis bewährt hat, diese Vorgehensweise aber noch Raum für Verbesserungen besitzt. Der Ort der Erfassung des Drehwinkels der Schwinge über den sogenannten Schwingenwinkelsensor und der benachbart dazu angeordneten Sensoreinrichtung liegt nahe an der Antriebseinheit in der Form einer Brennkraftmaschine, was dazu führt, dass Motorschwingungen auf die Sensoreinheit übertragen werden.

Die Motorschwingungen können die Signalgüte der von der Sensoreinrichtung erfassten Drehwinkelsignale durch hochfrequentes Rauschen stören. Das zur Auswertung herangezogene Sensorsignal muss mittels numerischer Filterung gedämpft werden. Diese Filterung benötigt Rechenzeit und führt zu einem zeitlichen Verzug, was wiederum dazu führt, dass die Ansteuerung des Solenoids zur Beeinflussung des Dämpfungsverhaltens über eine Steuerung einer Ventileinrichtung des Schwingungsdämpfers mit einem zeitlichen Versatz zur ursprünglichen Anregung stattfindet.

Der vorliegenden Erfindung liegt zur Beseitigung der geschilderten Nachteile die Aufgabe zugrunde, ein Federbein mit einer Federeinrichtung und einem Schwingungsdämpfer zu schaffen, mit dem es ermöglicht wird, die Signalgüte zu verbessern und den zeitlichen Verzug zu reduzieren. Auch soll ein Motorrad mit einem solchen Federbein bereitgestellt werden.

Die Erfindung weist zur Lösung dieser Aufgabe hinsichtlich des Federbeins die im Anspruch 1 angegebenen Merkmale auf. Vorteilhafte Ausgestaltungen hiervon sind in den weiteren Ansprüchen beschrieben. Darüber hinaus weist die Erfindung hinsichtlich des Motorrads die im Anspruch 8 angegebenen Merkmale auf.

Die Erfindung schafft ein Federbein mit einer Federeinrichtung und einem Schwingungsdämpfer, mit einem zur Aufnahme von Dämpfungsfluid ausgebildeten Zylinder und einem darin axial beweglichen Arbeitskolben, der mit einer eine Längsachse aufweisenden Kolbenstange gekoppelt ist, wobei der Arbeitskolben einen Innenraum des Zylinders in einen ersten und einen zweiten Arbeitsraum unterteilt, und mit einer Ventileinrichtung, die zur Steuerung der Strömung von Dämpfungsfluid zwischen dem ersten und zweiten Arbeitsraum eingerichtet ist sowie einem elektrisch betätigten Solenoid, welches Ventilmittel der Ventileinrichtung zur Veränderung eines Durchströmungsdurchlasses der Ventileinrichtung zwischen dem ersten und zweiten Arbeitsraum betätigt, wobei das Federbein eine ein Gehäuse aufweisende erste Aufnahme besitzt, an der sich die Kolbenstange abstützt und die erste Aufnahme zur Anordnung des Federbeins an einem ersten Aufbauelement eines Fahrzeugs eingerichtet ist und das Federbein eine zweite Aufnahme aufweist, welche zur Anordnung des Federbeins an einem zweiten Aufbauelement des Fahrzeugs eingerichtet ist und das Federbein eine Wegmesseinrichtung zur Erfassung des aktuellen Federwegs des Federbeins aufweist, wobei das Gehäuse eine Innenausnehmung aufweist und die Wegmesseinrichtung eine in der Innenausnehmung angeordnete magnetooperative Sensoreinrichtung aufweist, welche zur Erfassung eines Magnetfelds einer zur Sensoreinrichtung beabstandeten Magneteinrichtung eingerichtet ist.

Die Erfindung schafft also ein Federbein mit einer Federeinrichtung und einem Schwingungsdämpfer. Bei der Federeinrichtung kann es sich beispielsweise um eine Hauptfeder handeln, welche den Schwingungsdämpfer radial umgibt. Der Schwingungsdämpfer besitzt einen Zylinder oder Rohrzylinder, der zur Aufnahme von Dämpfungsfluid in der Form beispielsweise eines Hydrauliköls oder Gabelöls eingerichtet ist. In dem Zylinder ist ein Arbeitskolben axial beweglich angeordnet, der sich an einer Kolbenstange abstützt, welche eine Längsachse aufweist. Der Arbeitskolben unterteilt dabei den Innenraum des Zylinders in einen ersten und einen zweiten Arbeitsraum, wobei der erste Arbeitsraum beispielsweise als Druckstufenkammer ausgebildet sein kann und der zweite Arbeitsraum als Zugstufenkammer ausgebildet sein kann.

Auch besitzt der Schwingungsdämpfer eine Ventileinrichtung, die zur Steuerung der Strömung von Dämpfungsfluid zwischen dem ersten und zweiten Arbeitsraum eingerichtet ist und ein elektrisch betätigtes Solenoid, welches Ventilmittel der Ventileinrichtung zur Veränderung eines Durchströmungsdurchlasses der Ventileinrichtung zwischen dem ersten und zweiten Arbeitsraum betätigen kann. Bei dem Ventilmittel oder den Ventilmitteln kann es sich beispielsweise um Federscheiben oder Ventilshims handeln, welche mittels des Solenoids über eine vom Solenoid betätigte Druckstange oder Zugstange axial verschoben werden können und dabei einen Durchströmungsquerschnitt oder Durchlass zwischen den Federscheiben und einer Steuerkante der Ventileinrichtung verschließen oder öffnen können. Bei der Strömungsbewegung des Dämpfungsfluids durch den Durchlass wird Dämpfungsarbeit geleistet, mittels der einer Bewegung des Arbeitskolbens infolge einer Anregung durch die Fahrt des Motorrads über eine Fahrbahnunebenheiten oder dergleichen entgegengewirkt werden kann, die Amplitude der Bewegung also verringert werden kann.

Das Federbein weist eine erste Aufnahme mit einem Gehäuse auf, wobei sich die Kolbenstange an der ersten Aufnahme abstützt. Die erste Aufnahme kann also als Fußteil des Federbeins ausgebildet sein, wobei das Fußteil eine Bohrung oder Hülse aufweisen kann, in die ein Bolzen eingeführt werden kann, mittels dessen das Fußteil an beispielsweise einer Hinterradschwinge des Motorrads lösbar festgelegt werden kann. Das Fußteil oder die Aufnahme kann also als Gehäuse für die Aufnahme der Hülse ausgebildet sein und beispielsweise aus einer Aluminiumlegierung mittels eines Umformvorgangs gefertigt sein.

Die erste Aufnahme ist zur Anordnung des Federbeins an einem ersten Aufbauelement eines Fahrzeugs, bei dem es sich um das bereits genannte Motorrad handeln kann, eingerichtet, bei dem ersten Aufbauelement kann es sich um die bereits genannte Hinterradschwinge des Motorrads handeln, an dem sich die Kolbenstange des Schwingungsdämpfers abstützt.

Das Federbein kann sich dabei an dem ersten Aufbauelement direkt abstützen, beispielsweise also an einer Aufnahme des ersten Aufbauelements, oder sich auch unter Zwischenschaltung einer Kinematik abstützen, bei der es sich beispielsweise um eine Umlenkung handeln kann, über die sich das Federbein an der Hinterradschwinge oder der ersten Aufnahme abstützt.

Das Federbein besitzt auch eine zweite Aufnahme, welche zur Anordnung des Federbeins an einem zweiten Aufbauelement des Fahrzeugs eingerichtet ist. Bei dem Fahrzeug kann es sich um das bereits genannte Motorrad handeln und die zweite Aufnahme kann in der Form eines Gehäuses mit einer Hülse zur Aufnahme eines Bolzens oder dergleichen ausgebildet sein, mit dem die zweite Aufnahme an einem zweiten Aufbauelement des Fahrzeugs lösbar angeordnet sein kann. Bei dem zweiten Aufbauelement kann es sich beispielsweise um eine Abstützung oder eine Aufnahme an einem Rahmenbauteil des Fahrzeugs handeln. Bei einem Motorrad kann es sich also um eine Abstützung an dem Rahmen des Motorrads handeln, an der das Federbein mittels des bereits genannten Bolzens lösbar festgelegt werden kann.

Das Federbein besitzt eine Wegmesseinrichtung zur Erfassung des aktuellen Federwegs des Federbeins. Der aktuelle Wert des Federwegs kann zur Ermittlung der bereits genannten Relativgeschwindigkeit nach der Zeit differenziert werden.

Die Relativgeschwindigkeit dient dabei als Eingangsgröße für die Fahrwerksregelung des Fahrzeugs, welche beispielsweise nach dem bereits erwähnten Prinzip des Skyhook Reglers stattfinden kann.

Es ist nach der Erfindung vorgesehen, dass das Gehäuse eine Innenausnehmung aufweist und die Wegmesseinrichtung eine in der Innenausnehmung angeordnete magnetooperative Sensoreinrichtung aufweist, welche zur Erfassung eines Magnetfelds einer zur Sensoreinrichtung beabstandeten Magneteinrichtung eingerichtet ist.

Bei dem erfindungsgemäßen Federbein besitzt die Wegmesseinrichtung eine in der Innenausnehmung des Gehäuses angeordnete magnetooperative Sensoreinrichtung, welche beispielsweise einen Hallsensor oder einen ein dreidimensionales Magnetfeld erfassenden Hallsensor aufweisen kann. Das Magnetfeld wird dabei von einer Magneteinrichtung erzeugt, welche im Abstand zur Sensoreinrichtung angeordnet ist und bei der es sich beispielsweise um einen Permanentmagneten handeln kann.

Eine Relativbewegung der Magneteinrichtung relativ zur Sensoreinrichtung führt dann zu einer Veränderung des induzierten Magnetfelds, welches von dem beispielsweise genannten Hallsensor erfasst wird.

Da sich die Wegmesseinrichtung innerhalb des Gehäuses in der Innenausnehmung angeordnet befindet, ist es einerseits vor störenden Umwelteinflüssen, wie beispielsweise Staub, Schmutz, Wasser geschützt und wird andererseits vom Gehäuse auch gegen Störeinflüsse geschützt, wie beispielsweise die bereits erwähnten Motorschwingungen.

Solche Motorschwingungen können dem Wegsignal der Sensoreinrichtung oder des Hallsensor ein hochfrequentes Rauschen überlagern, das zur Verbesserung der Signalgüte des Wegsignals mittels Signalverarbeitung herausgefiltert werden muss, wie dies vorstehend bereits erwähnt wurde. Die erfindungsgemäße Konfiguration des Federbeins sorgt dafür, dass dem Rohsignal der Sensoreinrichtung in der Form des Wegsignals, also des Federwegsignals weniger hochfrequentes Rauschen überlagert wird, die Signalgüte des Rohsignals also verbessert wird.

Da das Rohrsignal bereits wesentlich weniger verrauscht ist, kann der Aufwand zur numerischen Signalverarbeitung des Rohsignals reduziert werden, insbesondere sinkt der Aufwand für die Filterung des Wegsignals aus dem Rohsignal beträchtlich, wodurch der Zeitbedarf für die Nachbearbeitung des Rohsignals zur Ermittlung des Wegsignals sinkt.

Da es sich bei dem Federwegsignal um ein Echtzeitsignal des aktuellen Federwegs des Federbeins handelt, sinkt damit der Zeitverzug, der durch die numerische Nachbearbeitung des Echtzeitsignals bedingt ist, bis aus dem Echtzeitsignal ein aktueller Wert für die Bestromung des Solenoids zur Veränderung des Durchströmungsquerschnitts oder des Durchströmungsdurchlasses der Ventileinrichtung bereitgestellt werden kann. So sinkt der Zeitbedarf für die Gewinnung des Wegsignals aus dem Rohsignal beispielsweise von 30 Millisekunden auf 3 Millisekunden. Die so mögliche Fahrwerksregelung mittels einer Beeinflussung des Dämpfungsverhaltens des Schwingungsdämpfers entspricht daher einer Echtzeitregelung mit weitgehend Null Zeitverzug.

Die Reduzierung des Zeitverzugs führt somit zu einer Verbesserung der Regelstrategie zur Ermittlung des aktuell benötigten oder vom Fahrer des Fahrzeugs gewünschten Dämpfungsverhaltens des Schwingungsdämpfers und damit zu einem Komfortgewinn bei der Fahrt des Fahrzeugs.

Wenn die Magneteinrichtung relativ zur Sensoreinrichtung ihre Lage verändert, was während der Fahrt des mit dem erfindungsgemäßen Federbein ausgestatteten Fahrzeugs laufend der Fall ist, verändert sich auch das von der Sensoreinrichtung erfasste Magnetfeld der Magneteinrichtung. Führt also beispielsweise die Magneteinrichtung eine Drehbewegung relativ zur Sensoreinrichtung durch, so wird die Veränderung des Magnetfelds durch die Sensoreinrichtung erfasst und ausgewertet. Die Auswertung erfolgt beispielsweise in der Form von Winkelgraden aufgrund der erwähnten Relativdrehbewegung der Magneteinrichtung zur Sensoreinrichtung.

Die Relativdrehbewegung der Magneteinrichtung führt, ausgehend von einem zum Zeitpunkt t vorliegenden ersten Winkelgradwert zu einem zum Zeitpunkt t1 vorliegenden zweiten Winkelgradwert.

Die Drehbewegung führt also zu einer Differenz der ermittelten Winkelgradwerte. Aus bekannten Geometriedaten des Fahrzeugs und des Federbeins kann somit der Federweg ermittelt werden, der sich entlang der Längsachse der Kolbenstange während der Relativdrehbewegung der Magneteinrichtung ergeben hat.

Über eine numerische Ableitung des Federwegs nach der Zeit kann somit die Relativgeschwindigkeit ermittelt werden, die einen Eingangsparameter für die erwähnte Fahrwerksregelung darstellt.

Es ist nach einer Weiterbildung der Erfindung vorgesehen, dass die Wegmesseinrichtung insbesondere lösbar in der Innenausnehmung festgelegt ist und eine Platine mit mindestens einem Hallsensor aufweist und die Innenausnehmung mit einer Vergussmasse vergossen ist.

Diese Konfiguration führt dazu, dass die Sensoreinrichtung gegen Störeinflüsse von außen geschützt ist und somit die Signalgüte des Hallsensors verbessert werden kann.

Es ist nach einer Weiterbildung der Erfindung auch vorgesehen, dass die Sensoreinrichtung einen Beschleunigungssensor aufweist, der zur Erfassung der Beschleunigung der Längsachse des Federbeins eingerichtet ist und die Sensoreinrichtung zur Übermittlung der erfassten Beschleunigung an eine Auswerteeinrichtung eingerichtet ist.

Bei einer Relativbewegung der Magneteinrichtung relativ zur Sensoreinrichtung mit einem oder mehr als einem Sensorelement verändert sich das von dem oder den Sensorelementen erfasste Magnetfeld, wie dies vorstehend bereits erwähnt wurde. Die Position der Magneteinrichtung stellt daher einen Bezugspunkt für die Sensoreinrichtung dar, dessen Lageveränderung von der Sensoreinrichtung mittels des oder der Sensorelemente erfasst wird, woraus sich der zurückgelegte Federweg $s_{rel}$ ergibt und daraus kann wiederum über die numerische Ableitung des Federwegs nach der Zeit die Relativgeschwindigkeit $v_{rel}$ der Einfederbewegung ermittelt werden.

Über eine zusätzliche Erfassung des Werts der Aufbaubeschleunigung $a_{body}$ des Aufbaus des Motorrads mittels eines Beschleunigungssensors und die numerische Integration über die Zeit kann die Aufbaugeschwindigkeit $v_{body}$ des Aufbaus des Motorrads ermittelt werden.

Die so ermittelten Werte gehen dann in die Bestimmung der minimalen Dämpfung $c_{min}$ und der maximalen Dämpfung $c_{max}$ ein, woraus nach dem nachfolgenden Zusammenhang eines Skyhook Reglers

$$\begin{array}{llll} c_{\min} & \text{if} & v_{body} \cdot v_{rel} \leq 0 \\ c_{\max} & \text{if} & v_{body} \cdot v_{rel} > 0 \end{array}$$

die gewünschte Dämpfung c für die Bedämpfung der Einfederbewegung bestimmt werden kann.

Bei der Platine kann es sich um eine gedruckte Leiterplatte handeln, welche Leiterbahnen zur Versorgung des oder der daran angeordneten Hallsensoren mit elektrischer Energie besitzt. Die Platine kann darüber hinaus Anschlußelemente zum Anschluss von Anschlussleitungen zum Einbringen der elektrischen Energie besitzen. Die Platine kann zusammen mit dem oder den Hallsensoren in dem Gehäuse angeordnet sein und zwar in der Innenausnehmung des Gehäuses, wobei die Innenausnehmung nach der Anordnung der Platine mit den Hallsensoren mit einer Vergussmasse vergossen wird. Die Vergussmasse sorgt dafür, dass die Platine mit den Hallsensoren in dem Gehäuse sicher gehalten wird und darüber hinaus gegen Stöße oder Erschütterungen oder Schwingungen, die von einer Brennkraftmaschine des mit dem erfindungsgemäßen Federbein ausgestatteten Motorrads stammen, geschützt ist. Auch wird damit der Einfluss eines hochfrequenten Rauschens auf das Sensorsignal reduziert. Damit wird die Qualität der von den Hallsensoren über Leiterbahnen auf der Platine abgegebenen Signale, welche sich aus der Erfassung des vorstehend erwähnten Magnetfelds ergeben, weiter verbessert.

Auf der vorstehend erwähnten gedruckten Leiterplatte kann auch der bereits erwähnte Beschleunigungssensor angeordnet sein, mit dem die Beschleunigung des Aufbaus des Motorrads erfasst werden kann, die in die vorstehend erwähnte Skyhook Regelung zur Ermittlung der gewünschten Dämpfung eingeht.

Die Wegsignale und das Beschleunigungssignal werden über auf der gedruckten Leiterplatte angeordnete Leitungen und Anschlussleitungen, die platinenseitig angeschlossen sind, beispielsweise als Pulswellen moduliertes Signal zu einer Auswerteeinrichtung geführt, bei der es sich beispielsweise um einen Fahrwerksregler handeln kann.

Es ist nach einer Weiterbildung der Erfindung auch vorgesehen, dass die Sensoreinrichtung ein Anschlussmittel für die Bestromung des elektrisch betätigten Solenoids aufweist. Bei dem Anschlussmittel kann es sich beispielsweise um Anschlussleitungen handeln, welche vorstehend bereits erläutert wurden und über die neben der Bestromung der Sensoreinrichtung auch von der Sensoreinrichtung ermittelte Signale an die Auswerteeinrichtung geführt werden. Darüber hinaus kann durch diese Funktionsintegration und das Merkmal der Erfindung, dass sich die Kolbenstange an der ersten Aufnahme abstützt, welche auch die Wegmesseinrichtung nach der Erfindung aufnimmt und von der auch die Anschlussleitungen herausgeführt werden, die Anschlussmittel oder Anschlussleitungen für die Bestromung des Solenoids durch die Kolbenstange hindurch bis zum Solenoid geführt werden.

Damit sind auch die Anschlussmittel für die Bestromung des Solenoids gegen Störeinflüssen von außen geschützt, da sie innerhalb der Kolbenstange und damit auch innerhalb des Zylinders des Schwingungsdämpfers angeordnet sind.

Es ist nach einer Weiterbildung der Erfindung auch vorgesehen, dass das Gehäuse mit einem Kunststoffwerkstoff gebildet ist und einen Durchlass zur Aufnahme von elektrischen Anschlussmitteln aufweist. Die vorstehend erwähnte Leiterplatte, welche den 3D Hallsensor und einen Beschleunigungssensor aufweisen kann, wie dies vorstehend bereits erwähnt wurde, ist in dem Kunststoffgehäuse angeordnet und wird von einer Vergussmasse geschützt. Darüber hinaus weist das Gehäuse einen Durchlass zur Aufnahme der elektrischen Anschlussmittel auf, über die auch der Solenoid bestromt werden kann und die Sensoren mit elektrischer Energie versorgt werden können und darüber hinaus die von den Sensoren bereitgestellten Werte oder Sensorsignale herausgeführt und an eine Auswerteeinrichtung in der Form des beispielsweise bereits erwähnten Fahrwerkreglers geführt werden können.

Die Erfindung schafft auch ein System mit einem Federbein, wie es vorstehend ausführlich erläutert wurde und mit einer Magneteinrichtung, wobei die Magneteinrichtung zur Anordnung an einer Hinterradschwinge eines Motorrads eingerichtet ist.

Damit kann die Magneteinrichtung beispielsweise direkt an der in Hochachsrichtung des Motorrads betrachtet oben liegenden Oberseite der Hinterradschwinge direkt benachbart zu einer Flanschfläche oder Anschlussfläche zur Anordnung der ersten Aufnahme des Federbeins angeordnet sein.

Die Hinterradschwinge führt bei der Fahrt des Motorrads über eine unebene Fahrbahn Verschwenkbewegungen an einem Rahmenbauteil des Motorrads aus und stützt sich dabei an dem erfindungsgemäßen Federbein ab. Die erste Aufnahme des Federbeins ist benachbart zu der Magneteinrichtung angeordnet, und zwar so, dass die Magneteinrichtung relativ zur Sensoreinrichtung der Wegmesseinrichtung eine kreissegmentförmige Relativbewegung ausführt. Das sich während der Relativbewegung verändernde Magnetfeld der Magneteinrichtung wird von der Sensoreinrichtung in der Form der bereits erwähnten Winkelsignale erfasst, welche dann an die Auswerteeinrichtung in der Form des beispielsweise bereits erwähnten Fahrwerkreglers weitergeleitet werden. Neben diesen Winkelsignalen werden über die Sensoreinrichtung auch Beschleunigungssignale übertragen, welche die Beschleunigung der Längsachse der Kolbenstange repräsentieren, die ebenfalls an die Auswerteeinrichtung weitergeleitet werden. Die Auswerteeinrichtung kann dann die Beschleunigungssignale numerisch integrieren, um daraus die Aufbaugeschwindigkeit des Motorrads zu ermitteln.

Der aus den Winkelsignalen errechnete Federweg wird nach der Zeit abgeleitet, um die Relativgeschwindigkeit zu ermitteln, welche dann zusammen mit der Aufbaugeschwindigkeit nach der vorstehend erwähnten Skyhook Regel zur Bestimmung der gewünschten Dämpfung ausgewertet wird. Der so ermittelte aktuelle Dämpfungswert kann zur Bestromung des Solenoids herangezogen werden, sodass der Solenoid für eine vorbestimmte Zeitdauer mit Strom beschaltet wird, um den Durchströmungsdurchlass der Ventileinrichtung zu verändern.

Die Erfindung schafft auch ein System mit einem Federbein, wie es vorstehend erläutert wurde und mit einer Magneteinrichtung, wobei die Magneteinrichtung zur Anordnung an einem Halter eingerichtet ist. Der Halter kann beispielsweise ein an einer Umlenkung angeordneter Halter sein und die Magneteinrichtung aufnehmen.

Wenn das Federbein Federbewegungen ausführt, führt der Halter mit der Magneteinrichtung kreissegmentförmige Bewegungen relativ zur Sensoreinrichtung durch, welche sich in der ersten Aufnahme des Federbeins in der Innenausnehmung angeordnet befindet.

Auf diese Weise wird von der Sensoreinrichtung das sich durch die Relativbewegung der Magneteinrichtung verändernde Magnetfeld erfasst und ausgewertet, um die vorstehend erwähnten Sensorsignale bereitzustellen. Auch bei dieser Ausführungsform kann die Aufbaubewegung des Motorrads zur Ermittlung der vorstehend erwähnten Beschleunigungssignale erfasst und ausgewertet werden.

Die Erfindung schafft auch ein Motorrad mit einem Vorderrad und einem Hinterrad sowie einem Fahrersattel und einer Antriebseinheit und einer das Hinterrad führenden Hinterradschwinge mit einem System, wie es vorstehend erwähnt wurde und einer an der Hinterradschwinge angeordneten Magneteinrichtung, wobei eine Schwenkbewegung der Hinterradschwinge zu einer kreisförmigen oder kreissegmentförmigen Relativbewegung der Magneteinrichtung relativ zur Sensoreinrichtung führt.

Diese kreisförmige oder kreissegmentförmige Relativbewegung der Magneteinrichtung relativ zur Sensoreinrichtung führt zu der erwähnten Veränderung des Magnetfelds der Magneteinrichtung, welche von der Sensoreinrichtung erfasst und in der Form von Sensorsignalen an die Auswerteeinrichtung weitergeleitet wird, wie dies vorstehend bereits erwähnt wurde.

Die Erfindung schafft auch ein Motorrad mit einem Vorderrad und einem Hinterrad sowie einem Fahrersattel und einer Antriebseinheit und einer das Hinterrad führenden Hinterradschwinge und einem System mit einem Halter, wie es vorstehend erwähnt wurde und einer an dem Halter angeordneten Magneteinrichtung, wobei die Schwenkbewegung der Hinterradschwinge zu einer kreisförmigen oder kreissegmentförmigen Relativbewegung der Magneteinrichtung relativ zur Sensoreinrichtung führt.

Der Halter kann beispielsweise an einer Umlenkung angeordnet sein, an der sich das Federbein abstützt. Diese kreisförmige oder kreissegmentförmige Relativbewegung der Magneteinrichtung relativ zur Sensoreinrichtung führt zu der erwähnten Veränderung des Magnetfelds der Magneteinrichtung, welche von der Sensoreinrichtung erfasst und in der Form von Sensorsignalen an die Auswerteeinrichtung weitergeleitet wird, wie dies vorstehend bereits erwähnt wurde.

Die Erfindung wird im Folgenden anhand der Zeichnung näher erläutert. Diese zeigt in:

Fig. 1 eine schematische Darstellung einer bekannten Einrichtung der Anmelderin zur Messung des Schwingenwinkels;

Fig. 2 eine Längsschnittansicht einer Ausführungsform eines Federbeins nach der vorliegenden Erfindung;

Fig. 3 eine schematische und perspektivische Darstellung der als Fußteil ausgebildeten ersten Aufnahme des Federbeins nach Fig. 2;

Fig. 4 eine Querschnittsansicht des Fußteils nach Fig. 3;

Fig. 5 eine Explosionsdarstellung der Wegmesseinrichtung;

Fig. 6 eine Seitenansicht auf das Fußteil nach Fig. 3 zur Erläuterung der Funktionsweise;

Fig. 7 eine schematische und perspektivische Darstellung des Fußteils des Federbeins mit einer an einem Halter angeordneten Magneteinrichtung;

Fig. 8 eine auszugsweise sowie schematische und perspektivische Darstellung des an einer Hinterradschwinge eines Motorrads angeordneten Federbeins;

Fig. 9 eine auszugsweise sowie schematische und perspektivische Darstellung des an einer Umlenkung angeordneten Federbeins mit einem Halter zur Aufnahme der Magneteinrichtung;

Fig. 10 eine Darstellung ähnlich derjenigen nach Fig. 9 mit einem mit der Umlenkung einstückig ausgebildeten Halter;

Fig. 11 eine Teilschnittansicht eines an einer Umlenkung angeordneten Federbeins nach der vorliegenden Erfindung;

Fig. 12 ein Diagramm einer Gegenüberstellung von Rohsignalen des Federwegs, wie sie nach der bekannten Vorgehensweise und nach der Erfindung bereitgestellt werden können; und

Fig. 13 eine Seitenansicht eines Motorrads mit dem erfindungsgemäßen Federbein.

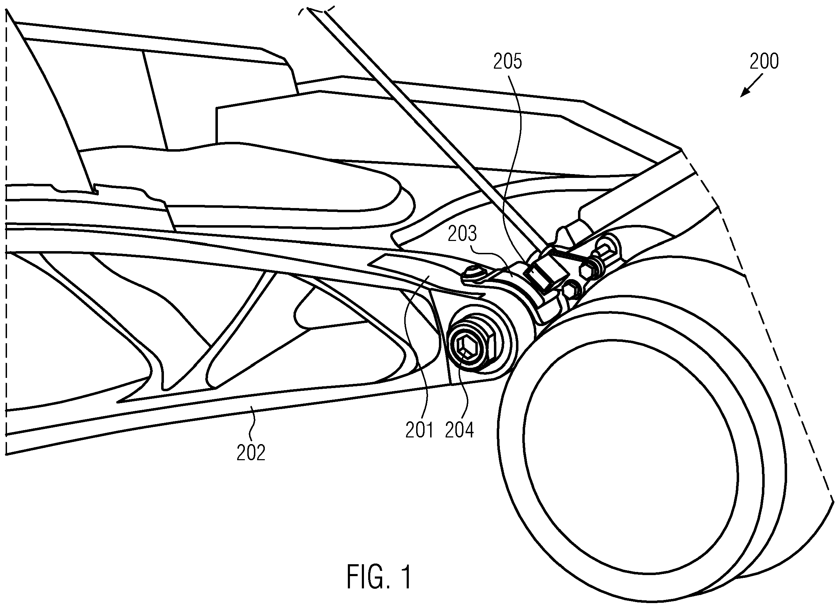

Fig. 1 der Zeichnung zeigt eine schematische Darstellung einer auf die Anmelderin zurückgehenden Einrichtung 200 zur Erfassung des Schwingenwinkels.

Die Einrichtung 200 umfasst einen an einer Oberseite 201 einer Hinterradschwinge 202 angeordneten Permanentmagnet 203, der sich zusammen mit der Hinterradschwinge 202 um einen Drehpunkt 204, an dem die Hinterradschwinge 202 an einem nicht näher dargestellten Bauteil des Motorrads angeordnet ist, verschwenken kann.

Die Verschwenkbewegung der Hinterradschwinge 202 am Drehpunkt 204 führt zu einer Veränderung der Relativlage des Permanentmagneten 204 relativ zu einem Schwingenwinkelsensor 205.

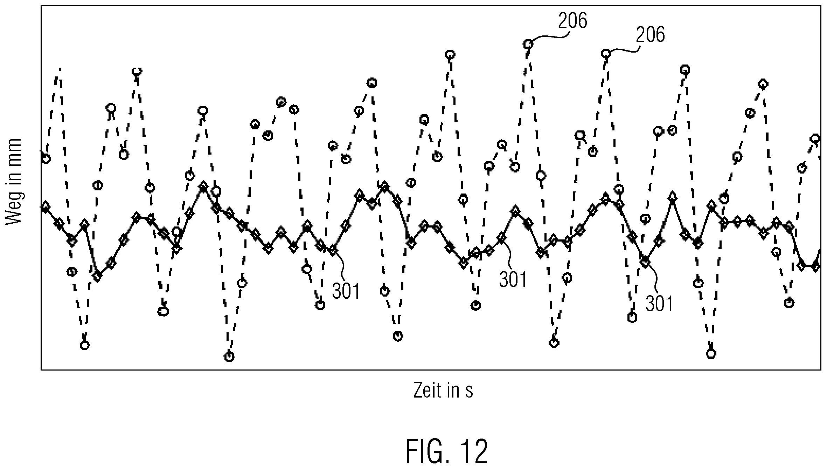

Mit dieser bekannten Einrichtung 200 können die im Diagramm nach der Fig. 12 dargestellten Messwerte 206 betreffend den Federweg in Millimeter aufgetragen über der Zeit in Sekunden erfasst werden. Wie es ohne weiteres ersichtlich ist, besitzen diese Messwerte eine relativ große Streubreite zu einem Mittelwert. Die große Streubreite stellt sich unter anderem aufgrund einem von den Motorschwingungen der Brennkraftmaschine des Motorrads induzierten hochfrequenten Rauschen ein, wobei dieser Einfluss bei der numerischen Differenzierung der Wegsignale zur Ermittlung eines Geschwindigkeitssignals noch verstärkt wird.

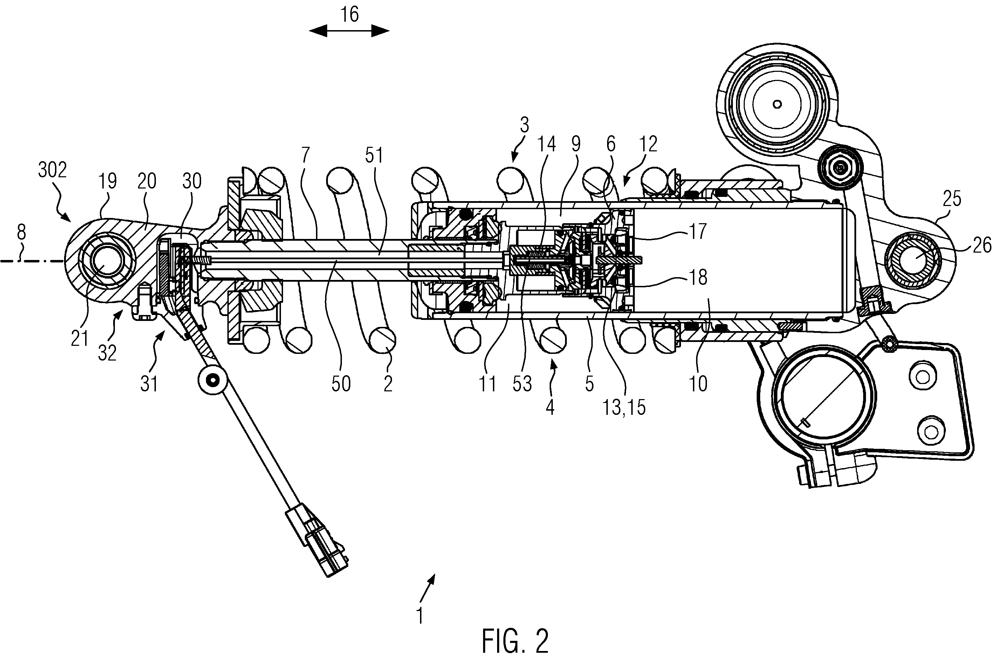

Fig. 2 der Zeichnung zeigt eine Längsschnittansicht eines Federbeins 1 nach einer Ausführungsform gemäß der vorliegenden Erfindung.

Das Federbein 1 weist eine als Hauptfeder 2 ausgebildete Federeinrichtung 3 auf und besitzt einen Schwingungsdämpfer 4, der zur Aufnahme von in der Zeichnung nicht dargestelltem Dämpfungsfluid in der Form eines Gabelöls oder eines Hydrauliköls ausgebildet ist.

Der Schwingungsdämpfer 4 weist einen Zylinder 5 auf, der bei der dargestellten Ausführungsform des Federbeins 1 als rohrstückförmiger Zylinder ausgebildet ist und darüber hinaus weist der Schwingungsdämpfer 4 auch einen im Zylinder 5 axial beweglichen Arbeitskolben 6 auf, der in Verbindung mit dem Dämpfungsfluid Dämpfungsarbeit verrichten kann.

Der Arbeitskolben 6 ist mit einer Kolbenstange 7 gekoppelt, also an der Kolbenstange 7 festgelegt, die eine Längsachse 8 aufweist.

Der Arbeitskolben 6 unterteilt einen Innenraum 9 des Zylinders 5 in einen ersten Arbeitsraum 10 sowie einen zweiten Arbeitsraum 11.

Der erste Arbeitsraum 10 kann auch als Druckstufenkammer bezeichnet werden und der zweite Arbeitsraum 11 kann auch als Zugstufenkammer bezeichnet werden. In der Druckstufenkammer befindliches Dämpfungsöl wird bei der Einfederbewegung des Federbeins 1 unter Druck gesetzt und in der Zugstufenkammer befindliches Dämpfungsöl wird bei der Ausfederbewegung des Federbeins 1 unter Druck gesetzt.

Der Schwingungsdämpfer 4 besitzt eine Ventileinrichtung 12 mit Ventilmitteln 15 in der Form von Federshims oder Ventilshims 13, welche von dem elektrisch betätigten Solenoid 14 betätigt werden können, also in Axiallängsrichtung 16 des Zylinders 5 verschoben werden können, um die Strömung von Dämpfungsfluid zwischen dem ersten Arbeitsraum 10 und dem zweiten Arbeitsraum 11 zu steuern, indem die Querschnittsfläche 17 eines Durchströmungsdurchlasses 18 verändert wird.

Über eine Veränderung der Querschnittsfläche 17, welche vom Dämpfungsfluid durchströmt werden kann, um zwischen dem ersten Arbeitsraum 10 und dem zweiten Arbeitsraum 11 zu strömen, kann die vom Arbeitskolben 6 verrichtete Dämpfungsarbeit gesteuert werden.

Das Federbein 1 weist eine erste Aufnahme 19 auf, wie dies anhand von Fig. 2 der Zeichnung ersichtlich ist, die erste Aufnahme 19 besitzt ein Gehäuse 20, an dem sich die Kolbenstange 7 abstützt.

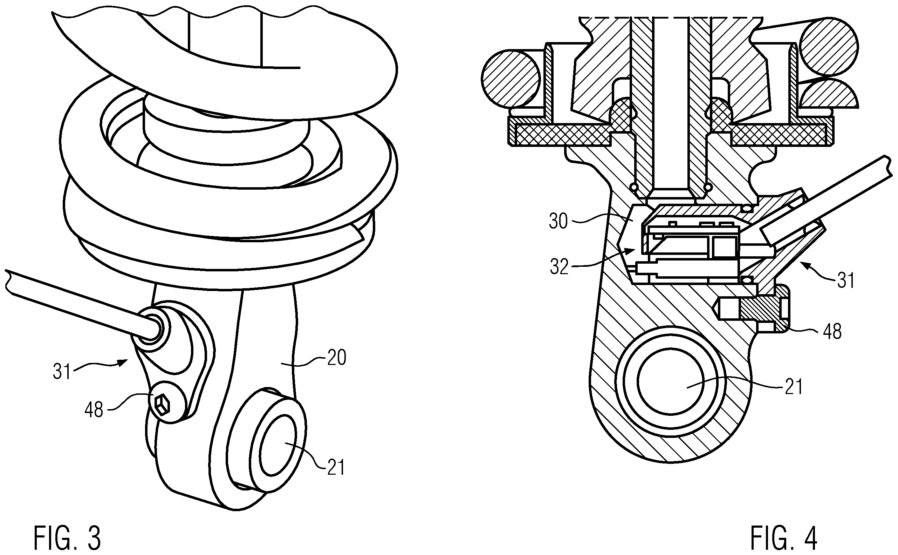

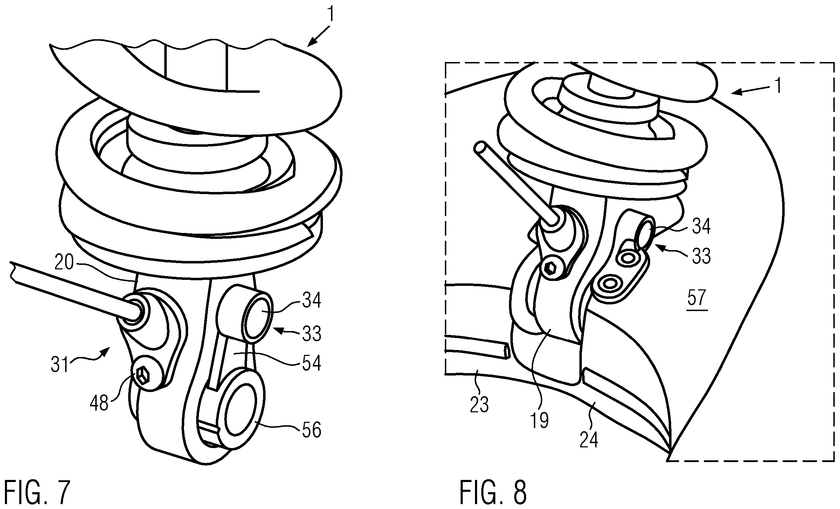

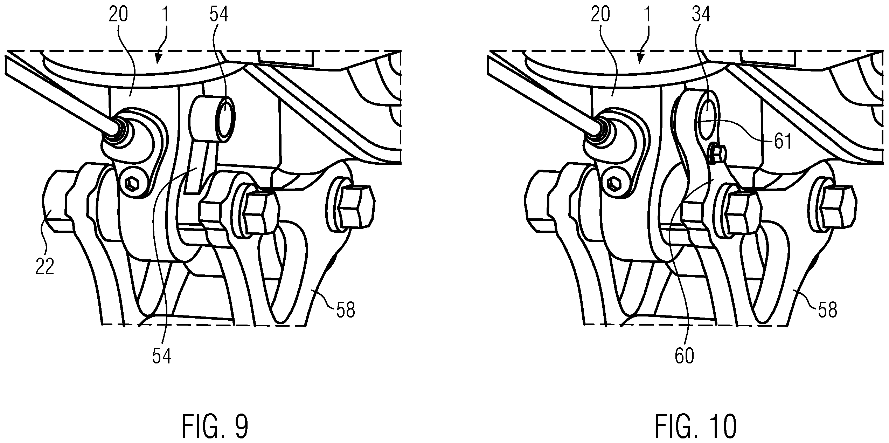

Die erste Aufnahme weist eine Ausnehmung 21 auf, wie dies auch anhand von Fig. 3 und Fig. 4 der Zeichnung ersichtlich ist, welche von einem Bolzen 22, der beispielsweise anhand von Fig. 9 der Zeichnung ersichtlich ist, durchsetzt werden kann und der Abstützung des Federbeins 1 an einem ersten Aufbauelement 23 dient, bei dem es sich beispielsweise um die in Fig. 8 der Zeichnung ersichtliche Hinterradschwinge 24 dient. Das Federbein 1 stützt sich also über die erste Aufnahme 19 an der Hinterradschwinge 24 ab und zwar beispielsweise mittels eines in Fig. 8 der Zeichnung näher ersichtlichen Bolzens, welcher dem Bolzen 22 nach Fig. 9 der Zeichnung entspricht.

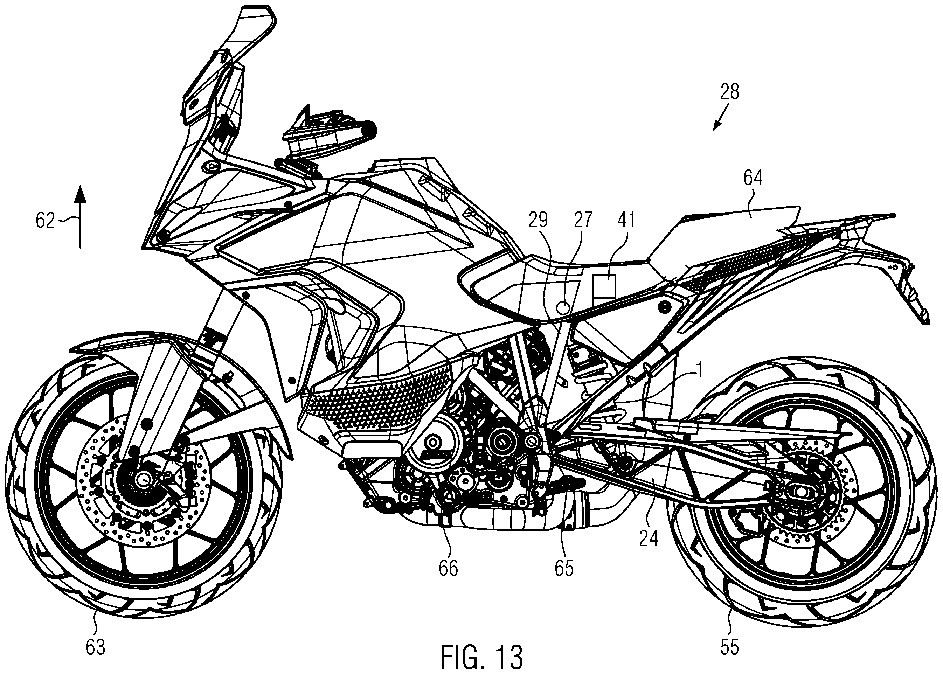

Das Federbein 1 besitzt auch eine zweite Aufnahme 25 mit einer Ausnehmung 26, welche zur Aufnahme eines Bolzens dient, mit dem das Federbein 1 an einem zweiten Aufbauelement 27 des Fahrzeugs, bei dem es sich beispielsweise um das in Fig. 13 der Zeichnung ersichtliche Motorrad 28 handeln kann, abgestützt werden kann.

Das zweite Aufbauelement 27 ist bei dem Motorrad 28 ein Rahmenbauteil 29, wie dies anhand von Fig. 13 der Zeichnung ersichtlich ist.

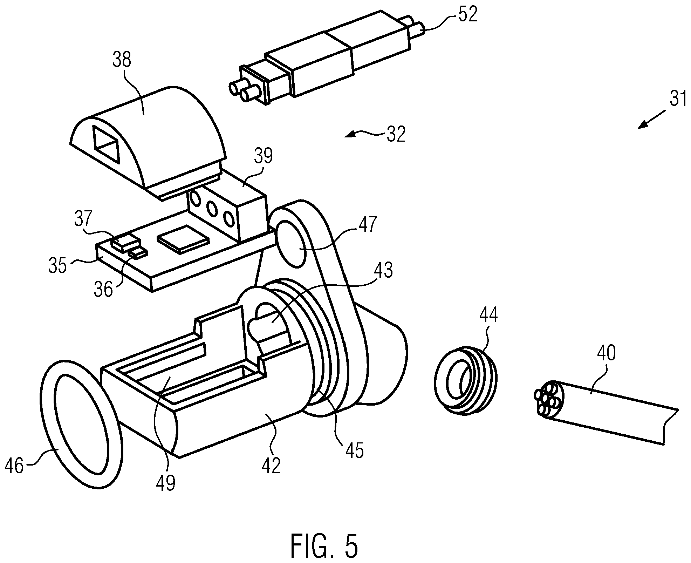

Fig. 2 der Zeichnung zeigt, dass das Gehäuse 20 eine Innenausnehmung 30 besitzt, in der sich eine Wegmesseinrichtung 31 angeordnet befindet, welche eine näher anhand von Fig. 5 der Zeichnung ersichtliche magnetooperative Sensoreinrichtung 32 aufweist, die zur Erfassung eines Magnetfelds einer zur Sensoreinrichtung 32 beabstandeten Magneteinrichtung 33 eingerichtet ist. Die Magneteinrichtung 33 ist beispielsweise anhand von Fig. 7 und Fig. 8 der Zeichnung ersichtlich und bei der Magneteinrichtung 33 kann es sich um einen Permanentmagneten 34 handeln.

Fig. 5 der Zeichnung zeigt eine Explosionsansicht der Wegmesseinrichtung 31. Die Wegmesseinrichtung 31 ist in der Innenausnehmung 30 des Gehäuses 20 insbesondere dort lösbar festgelegt angeordnet, wie dies anhand von Fig. 2 der Zeichnung ersichtlich ist und besitzt eine Sensoreinrichtung 32.

Die Wegmesseinrichtung 31 weist die Sensoreinrichtung 32 auf, welche eine Platine oder gedruckte Leiterplatte 35 aufweist, an der ein Hallsensor 36 angeordnet ist. Darüber hinaus ist an der Platine 35 auch ein Beschleunigungssensor 37 angeordnet, der zur Messung der Beschleunigung der Kolbenstange 7 entlang der Längsachse 8 eingerichtet ist. Die Platine 35 kann von einer Verschlusskappe 38 abgedeckt werden, welche die Platine 35 überspannt und darüber hinaus besitzt die Platine 35 auch eine Anschlussbuchse 39, an der die Anschlussmittel 40 angeschlossen werden können, welche zur Spannungsversorgung der Platine 35 mit den Sensoren 36, 37 dienen und über die auch die Sensorsignale der Sensoren 35 und 36 zu einer Auswerteeinrichtung 41, welche anhand von Fig. 13 der Zeichnung ersichtlich ist, geleitet werden können, bei der es sich um einen Fahrwerksregler handeln kann.

Die Platine 35 ist in einem Gehäuse 42 aufgenommen, welche mit einem Kunststoffwerkstoff gebildet ist und das einen Durchlass 43 zur Aufnahme der Anschlussmittel 40 besitzt.

Die Hülse 44 dient der Aufnahme der Anschlussmittel 40 und der Festlegung der Anschlussmittel 40 in dem Durchlass 43.

In einer Nut 45 des Kunststoffgehäuses 42 kann ein O-Ring 46 werden, der die Innenausnehmung 30 in Richtung nach außen abdichtet.

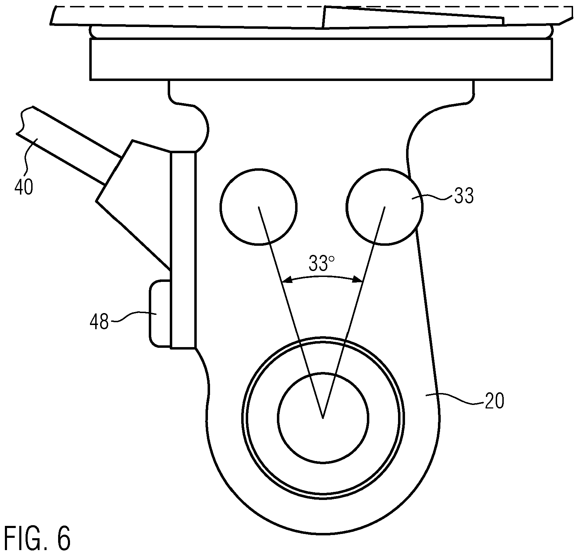

Über die anhand von Fig. 5 ersichtliche Ausnehmung 47 kann das in der Innenausnehmung 30 angeordnete Gehäuse 42 mittels einer anhand von Fig. 6 der Zeichnung ersichtlichen Schraube 48 lösbar festgelegt werden, die Innenausnehmung 30 oder die Innenausnehmung 49 des Gehäuses 42 oder beide Innenausnehmungen können mit einer Vergussmasse vergossen werden, sodass die Platine 35 und/oder das Gehäuse 42 gegen das Eindringen von Schmutz und Wasser geschützt sind.

Über die Anschlussleitungen oder Anschlussmittel 52 kann auch das Solenoid 14 mit elektrischer Energie versorgt werden und zwar beispielsweise über eine elektrische Leitung 50, die sich in einer Innenausnehmung 51 der Kolbenstange 7 angeordnet befindet.

Fig. 3 der Zeichnung zeigt, dass die Wegmesseinrichtung 31 mit der Sensoreinrichtung 32 in dem Gehäuse 20 angeordnet ist und die Schnittdarstellung nach Fig. 4 der Zeichnung zeigt, dass auch die Anschlussleitungen 52 für die Versorgung des Solenoids 14 mit elektrischer Energie in der Innenausnehmung 30 des Gehäuses 20 angeordnet sind und von einer nicht näher dargestellten Vergussmasse umschlossen sind.

Fig. 6 der Zeichnung zeigt eine Seitenansicht auf das Fußteil nach Fig. 3 zur Erläuterung der Funktionsweise.

Wie es anhand der schematischen Darstellung nach Fig. 6 der Zeichnung ersichtlich ist, führt die Magneteinrichtung 33 bei einer Verschwenkbewegung der Hinterradschwinge 24 relativ zum Gehäuse 20 und damit relativ zu der in dem Gehäuse angeordneten Sensoreinrichtung 32 eine kreissegmentförmige Bewegung aus. Der Verschwenkwinkel beträgt bei der dargestellten Ausführungsform 33 Grad.

Die Sensoreinrichtung 32 ist mit dem 3D Hallsensor 36 dazu in der Lage, das sich durch die Relativbewegung des Magneten 33 verändernde Magnetfeld zu erfassen. Die Erfassungssignale des Sensors 36 werden über die Anschlussmittel 40 an die Auswerteeinrichtung 41 des Motorrads 28 weitergeleitet. Die Auswerteeinrichtung 41 kann hieraus den jeweils aktuellen Federweg des Federbeins 1 in Echtzeit bestimmen. Zudem wird die Beschleunigung der ungefederten Masse in der Form des Hinterrads 55 des Motorrads 28 über dem Beschleunigungssensor 37 erfasst und auch diese Signale werden an die Auswerteeinrichtung 41 weitergeleitet. Die Auswerteeinrichtung kann unter Zugrundelegung der genannten Signale die gewünschte Dämpfung c für die Einfederbewegung oder Ausfederbewegung des Federbeins 1 bestimmen und das Solenoid 14 zur Veränderung des Durchströmungsdurchlasses 18 bestromen, wodurch der Anker 53 des Solenoids 14 entlang der Längsachse 8 des Federbeins 1 verlagert wird und damit auch die Federshims 13 verlagert werden und der Durchströmungsquerschnitt 17 des Durchströmungsdurchlasses 18 vergrößert oder verkleinert wird und damit die vom Schwingungsdämpfer 4 verrichtete Dämpfungsarbeit vergrößert oder verkleinert wird und damit die Dämpfung vergrößert oder verkleinert wird, mit der der Schwingungsdämpfer 4 der Federbewegung des Federbeins 1 entgegenwirkt.

Fig. 7 der Zeichnung zeigt, dass die Magneteinrichtung 34 an einem Halter 54 angeordnet sein kann, der sich zusammen mit dem Schwenklager 56 bei der Federbewegung des Federbeins 1 relativ zur Aufnahme 20 und damit relativ zur Wegmesseinrichtung 31 verschwenkt. Fig. 8 der Zeichnung zeigt, dass die Magneteinrichtung 33 direkt an einer Oberseite 57 der Hinterradschwinge 24 angeordnet sein kann.

Fig. 9 der Zeichnung zeigt eine Konfiguration, bei der sich das Federbein 1 an einer Umlenkung 58 abstützt, welche sich ihrerseits an einer Hinterradschwinge 24 abstützen kann. Die Verschwenkbewegung der Hinterradschwinge 24 führt dann dazu, dass sich die Umlenkung 58 zusammen mit dem Halter 54 des Schwenklagers 56 verschwenkt und zwar relativ zum Gehäuse 20 des Federbeins 1, in dem die Wegmesseinrichtung 31 angeordnet ist. In dem Aufnahmeauge 59 des Halters 54 ist ein in Fig. 9 der Zeichnung nicht näher dargestellter Permanentmagnet angeordnet, dessen Magnetfeld auf die Sensoreinrichtung 31 wirkt, welche in dem Gehäuse 20 angeordnet ist.

Fig. 10 der Zeichnung schließlich zeigt einen mit der Umlenkung 58 einstückig ausgebildeten Halter 60, in dessen Aufnahmeauge 61 ein Permanentmagnet 34 angeordnet ist. Während der Schwenkbewegung der in Fig. 10 der Zeichnung nicht näher dargestellten Hinterradschwinge relativ zum Federbein 1 verändert sich daher das vom Permanentmagnet 34 ausgeübte Magnetfeld relativ zur Wegmesseinrichtung 31, was von der Sensoreinrichtung 31 detektiert werden kann, wie dies vorstehend bereits erläutert wurde.

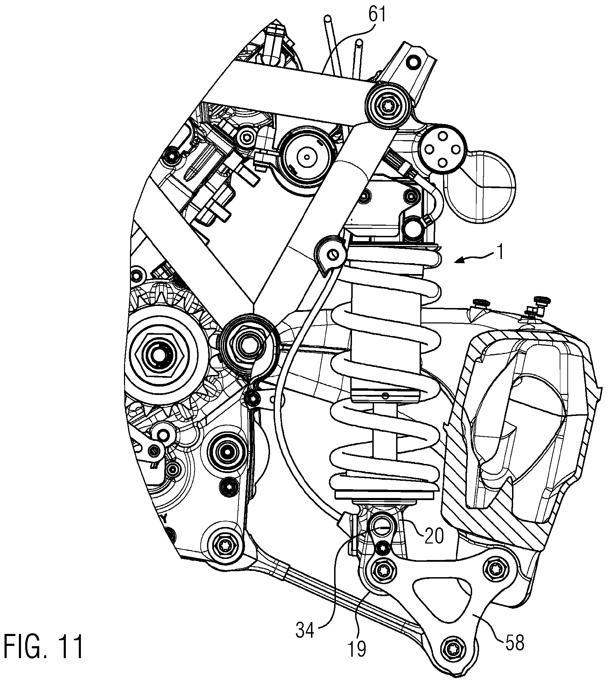

Fig. 11 der Zeichnung schließlich zeigt eine Teilschnittansicht eines an einer Umlenkung angeordneten Federbeins 1 nach der vorliegenden Erfindung.

Das Federbein 1 stützt sich mit der ersten Aufnahme 19 an der Umlenkung 58 ab. Zudem stützt sich das Federbein 1 mit der zweiten Aufnahme 25 an einem Rahmenausleger 61 ab. Ein Permanentmagnet 34 ist in dem Halter 54 angeordnet und führt bei der Verschwenkbewegung der nicht näher dargestellten Hinterradschwinge relativ zum Federbein 1 eine kreissegmentförmige Bewegung durch, welche anhand von Fig. 6 der Zeichnung erläutert wurde. Das sich bei der Relativbewegung des Permanentmagneten 20 relativ zum Gehäuse 20 mit der Wegmesseinrichtung 31 verändernde Magnetfeld wird von der Sensoreinrichtung 31 erfasst und die sich daraus ergebenden Signale werden an die Auswerteeinrichtung 41 übertragen, wie dies vorstehend bereits erläutert wurde.

Fig. 12 der Zeichnung zeigt ein Diagramm mit den bereits vorstehend erläuterten Rohsignalmesswerten 206, wie sie mit der bekannten Konfiguration 200 mit dem Schwingenwinkelsensor 205 erhalten werden.

Im Vergleich hierzu zeigen die Rohsignalmesswerte 301, wie sie mit dem erfindungsgemäßen Federbein 1 mit der in dem Gehäuse 20 beziehungsweise dem Fußteil 302 integrierten Wegmesseinrichtung 31 gewonnen werden, eine wesentlich geringere Streubreite als die Streubreite der Messwerte 206.

Die erfindungsgemäße Wegmesseinrichtung 31 beziehungsweise das erfindungsgemäße Federbein 1 zeigt mit der in dem Fußteil 302 des Federbeins 1 integrierten Wegmesseinrichtung 31 ein wesentlich geringeres Rauschen im Rohsignal, was sich durch die wesentlich geringere Streubreite des Rohsignals 301 ausdrückt.

Dies führt dazu, dass das Rohsignal 301 zur Ermittlung des Federwegs wesentlich weniger gefiltert werden muss als das Rohsignal 206. Dies führt zu einem Zeitvorteil bei der Nachbearbeitung des Rohsignals 301, da der numerische Aufwand zur Filterung des Signals reduziert ist und damit auch die für die Nachbearbeitung benötigte Rechenzeit.

Dies wiederum führt zu einem geringeren Zeitverzug bei der Echtzeitregelung der durch den Schwingungsdämpfer bereitgestellten Dämpfung.

Fig. 13 der Zeichnung schließlich zeigt ein Motorrad 28 mit einem Vorderrad 63 sowie einem Fahrersattel 64 und einer Antriebseinheit 66 in der Form einer Brennkraftmaschine. Die Hinterradschwinge 24 stützt sich an dem Schwingendrehpunkt 65 ab und führt an diesem eine Schwenkbewegung aus. Die Hinterradschwinge 24 stützt sich an dem erfindungsgemäßen Federbein 1 ab und der Federweg des Federbeins 1, der sich bei Verschwenkbewegung der Hinterradschwinge 24 einstellt, kann mittels des Federbeins 1 erfasst werden, wie dies vorstehend ausführlich erläutert wurde.

Die erfindungsgemäße Konfiguration des Federbeins sorgt für eine kreissegmentförmige Relativbewegung des Permanentmagneten relativ zum Hallsensor der Sensoreinrichtung. Der Hallsensor kann dadurch die Lage des Permanentmagneten zu jedem Zeitpunkt in Echtzeit präzise feststellen. Das so ermittelte Lagesignal kann in einen Winkel umgerechnet werden und zur Auswerteeinrichtung in der Form beispielsweise eines Fahrwerkreglers weitergeleitet werden. Zusätzlich nimmt der Beschleunigungssensor die Beschleunigung in Richtung der Federbeinlängsachse auf und auch dieses Beschleunigungssignale wird an die Auswerteeinrichtung weitergeleitet. Beide Signale werden zu einem Relativgeschwindigkeitssignal des Schwingungsdämpfers zur Echtzeitregelung verarbeitet. Zusätzlich können beide Signale auch zur Ermittlung der Aufbaubewegungen des Motorrads in Richtung der Hochachse 62 nach Fig. 13 und der Bewegung des Hinterrads 55 des Motorrads 28 ausgewertet werden.

Hinsichtlich vorstehend im Einzelnen nicht näher erläuterter Merkmale der Erfindung wird im Übrigen ausdrücklich auf die Patentansprüche und die Zeichnung verwiesen.

Bezugszeichenliste

1. Federbein
2. Hauptfeder
3. Federeinrichtung
4. Schwingungsdämpfer
5. Zylinder
6. Arbeitskolben
7. Kolbenstange
8. Längsachse
9. Innenraum
10. Erster Arbeitsraum
11. Zweiter Arbeitsraum
12. Ventileinrichtung
13. Federshims
14. Solenoid
15. Ventilmittel
16. Axiallängsrichtung
17. Querschnittsfläche
18. Durchströmungsdurchlass
19. Erste Aufnahme
20. Gehäuse
21. Ausnehmung
22. Bolzen
23. Erstes Aufbauelement
24. Hinterradschwinge
25. Zweite Aufnahme
26. Ausnehmung
27. Zweites Aufbauelement
28. Motorrad
29. Rahmenbauteil
30. Innenausnehmung
31. Wegmesseinrichtung
32. Sensoreinrichtung
33. Magneteinrichtung
34. Permanentmagnet
35. Platine
36. Hallsensor
37. Beschleunigungssensor
38. Verschlusskappe
39. Anschlussbuchse
40. Anschlussmittel
41. Auswerteeinrichtung
42. Gehäuse
43. Durchlass
44. Hülse
45. Nut
46. O-Ring
47. Ausnehmung
48. Schraube
49. Innenausnehmung
50. Elektrische Leitungen
51. Innenausnehmung
52. Anschlussleitungen

53. Anker
54. Halter
55. Hinterrad
56. Schwenklager
57. Oberseite
58. Umlenkung
59. Aufnahme Auge
60. Halter
61. Rahmenausleger
62. Hochachse
63. Vorderrad
64. Fahrersattel
65. Schwingendrehpunkt
66. Antriebseinheit, Brennkraftmaschine
200. Einrichtung
201. Oberseite
202. Hinterradschwinge
203. Permanentmagnet
204. Drehpunkt
205. Schwingenwinkelsensor
206. Messwerte
301. Rohsignalmesswerte
302. Fußteil

**Patentansprüche**

1.  Federbein (1) mit einer Federeinrichtung (3) und einem Schwingungsdämpfer (4) mit einem zur Aufnahme von Dämpfungsfluid ausgebildeten Zylinder (5) und einem darin axial beweglichen Arbeitskolben (6), der mit einer eine Längsachse (8) aufweisenden Kolbenstange (7) gekoppelt ist, wobei der Arbeitskolben (6) einen Innenraum (9) des Zylinders (5)in einen ersten (10) und einen zweiten (11) Arbeitsraum unterteilt, und mit einer Ventileinrichtung (12), die zur Steuerung der Strömung von Dämpfungsfluid zwischen dem ersten (10) und zweiten (11) Arbeitsraum eingerichtet ist sowie einem elektrisch betätigten Solenoid (14), welches Ventilmittel (15) der Ventileinrichtung (12) zur Veränderung eines Durchströmungsdurchlasses (18) der Ventileinrichtung (12) zwischen dem ersten (11) und zweiten (11) Arbeitsraum betätigt, wobei das Federbein (1) eine ein Gehäuse (20) aufweisende erste Aufnahme (19) besitzt, an der sich die Kolbenstange (7) abstützt und die erste Aufnahme (19) zur Anordnung des Federbeins (1) an einem ersten Aufbauelement (23) eines Fahrzeugs (28) eingerichtet ist und das Federbein (1) eine zweite Aufnahme (25) aufweist, welche zur Anordnung des Federbeins (1) an einem zweiten Aufbauelement (27) des Fahrzeugs (28) eingerichtet ist und das Federbein (1) eine Wegmesseinrichtung (31) zur Erfassung des aktuellen Federwegs des Federbeins (1) aufweist, **dadurch gekennzeichnet, dass** das Gehäuse (20) eine Innenausnehmung (30) aufweist und die Wegmesseinrichtung (31) eine in der Innenausnehmung (30) angeordnete magnetooperative Sensoreinrichtung (31) aufweist, welche zur Erfassung eines Magnetfelds einer zur Sensoreinrichtung (31) beabstandeten Magneteinrichtung (33) eingerichtet ist.

2.  Federbein (1) nach Anspruch 1, **dadurch gekennzeichnet, dass** die Wegmesseinrichtung (31) insbesondere lösbar in der Innenausnehmung (30) festgelegt ist und eine Platine (35) mit mindestens einem Hallsensor (36) aufweist und die Innenausnehmung mit einer Vergussmasse vergossen ist.

3.  Federbein (1) nach Anspruch 1 oder 2, **dadurch gekennzeichnet, dass** die Sensoreinrichtung (32) einen Beschleunigungssensor (37) aufweist, der zur Erfassung der Beschleunigung der Längsachse des Federbeins (1) eingerichtet ist und die Sensoreinrichtung (32) zur Übermittlung der erfassten Beschleunigung an eine Auswerteeinrichtung (41) eingerichtet ist.

4.  Federbein (1) nach einem der vorstehenden Ansprüche, **dadurch gekennzeichnet, dass** die Sensoreinrichtung (32) ein Anschlussmittel (52) für die Bestromung des elektrisch betätigten Solenoids (14) aufweist.

5.  Federbein (1) nach einem der vorstehenden Ansprüche, **dadurch gekennzeichnet, dass** das Gehäuse (20) mit einem Kunststoffwerkstoff gebildet ist und einen Durchlass (43) zur Aufnahme von elektrischen Anschlussmitteln (40) aufweist.

**6.** System mit einen Federbein (1) nach einem der vorstehenden Ansprüche und mit einer Magneteinrichtung (33), **dadurch gekennzeichnet, dass** die Magneteinrichtung (33) zur Anordnung an einer Hinterradschwinge (24) eines Motorrads (28) eingerichtet ist.

**7.** System mit einem Federbein (1) nach einem der vorstehenden Ansprüche 1 bis 5 und mit einer Magneteinrichtung (33), **dadurch gekennzeichnet, dass** die Magneteinrichtung (33) zur Anordnung an einem Halter (54, 60) eingerichtet ist.

**8.** Motorrad (28) mit einem Vorderrad (63) und einem Hinterrad (55) sowie einem Fahrersattel (64) und einer Antriebseinheit (66) und einer das Hinterrad (55) führenden Hinterradschwinge (24) und einem System nach Anspruch 6 und einer an der Hinterradschwinge (24) angeordneten Magneteinrichtung (33), **dadurch gekennzeichnet, dass** eine Schwenkbewegung der Hinterradschwinge (24) zu einer kreisförmigen Relativbewegung der Magneteinrichtung (33) relativ zur Sensoreinrichtung (32) führt.

**9.** Motorrad (28) mit einem Vorderrad (63) und einem Hinterrad (55) sowie einem Fahrersattel (64) und einer Antriebseinheit (66) und einer das Hinterrad (55) führenden Hinterradschwinge (24) und einem System nach Anspruch 7 und einer an dem Halter (54, 60) angeordneten Magneteinrichtung (33), **dadurch gekennzeichnet, dass** eine Schwenkbewegung der Hinterradschwinge (24) zu einer kreisförmigen Relativbewegung der Magneteinrichtung (33) relativ zur Sensoreinrichtung (32) führt.

FIG. 1

FIG. 2

FIG. 4

FIG. 3

FIG. 5

FIG. 6

EP 4 549 777 A1

FIG. 8

FIG. 7

FIG. 10

FIG. 9

FIG. 11

EP 4 549 777 A1

FIG. 12

FIG. 13

Europäisches
Patentamt

European
Patent Office

Office européen
des brevets

# EUROPÄISCHER RECHERCHENBERICHT

Nummer der Anmeldung

EP 24 20 8258

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP H05 10368 A (YAMAHA MOTOR CO LTD) 19. Januar 1993 (1993-01-19) | 1,3-7 | INV. F16F9/32 |
| A | * Abbildungen 1-3 * | 2,8,9 | F16F9/54 B62K25/28 |
| A | JP H05 10367 A (YAMAHA MOTOR CO LTD) 19. Januar 1993 (1993-01-19) * Abbildungen 1-4 * | 1-9 | B62J45/41 B62J45/414 B62J45/42 B60G17/019 |
| A | JP H07 208529 A (SUZUKI MOTOR CO) 11. August 1995 (1995-08-11) * Abbildungen 1-7 * | 1-9 | B60G17/06 ADD. F16F9/46 |
| A | JP H06 32780 U (.) 28. April 1994 (1994-04-28) * Abbildungen 1, 3 * | 1 | |
| A | US 6 318 524 B1 (LUTZ DIETER [DE] ET AL) 20. November 2001 (2001-11-20) * Zusammenfassung; Abbildung 2 * * Spalte 4, Zeile 43 - Spalte 5, Zeile 2 * | 1 | |
| A | DE 38 14 717 A1 (PFISTER GMBH [DE]) 9. November 1989 (1989-11-09) * Zusammenfassung; Abbildung 5 * | 1 | RECHERCHIERTE SACHGEBIETE (IPC) F16F B60G B62J B62K |

Der vorliegende Recherchenbericht wurde für alle Patentansprüche erstellt

| Recherchenort | Abschlußdatum der Recherche | Prüfer |
|---|---|---|
| Den Haag | 17. März 2025 | Maroño Martínez, J |

KATEGORIE DER GENANNTEN DOKUMENTE

X : von besonderer Bedeutung allein betrachtet
Y : von besonderer Bedeutung in Verbindung mit einer
　　anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
　　nach dem Anmeldedatum veröffentlicht worden ist
D : in der Anmeldung angeführtes Dokument
L : aus anderen Gründen angeführtes Dokument
　　.............................................................
& : Mitglied der gleichen Patentfamilie, übereinstimmendes
　　Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 24 20 8258

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-03-2025

| Im Recherchenbericht angeführtes Patentdokument | | Datum der Veröffentlichung | Mitglied(er) der Patentfamilie | | Datum der Veröffentlichung |
|---|---|---|---|---|---|
| JP H0510368 | A | 19-01-1993 | KEINE | | |
| JP H0510367 | A | 19-01-1993 | KEINE | | |
| JP H07208529 | A | 11-08-1995 | KEINE | | |
| JP H0632780 | U | 28-04-1994 | KEINE | | |
| US 6318524 | B1 | 20-11-2001 | DE | 19801054 C1 | 29-07-1999 |
| | | | FR | 2773600 A1 | 16-07-1999 |
| | | | US | 6318524 B1 | 20-11-2001 |
| DE 3814717 | A1 | 09-11-1989 | KEINE | | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2036746 B1

- EP 1964696 B1